(19) Europäisches Patentamt

European Patent Office

Office européen des brevets

(11) **EP 1 380 914 A1**

(12) **DEMANDE DE BREVET EUROPEEN**

(43) Date de publication:
**14.01.2004 Bulletin 2004/03**

(51) Int Cl.⁷: **G05F 3/26**

(21) Numéro de dépôt: **03364013.7**

(22) Date de dépôt: **04.07.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **09.07.2002 FR 0208650**

(71) Demandeur: **ATMEL NANTES SA**
**44306 Nantes Cédex 3 (FR)**

(72) Inventeur: **Chatal, Joel**
**44470 Carquefou (FR)**

(74) Mandataire: **Vidon, Patrice**
**Cabinet Vidon**
**16 B, rue Jouanet**
**B.P. 90333**
**Technopole Atalante**
**35703 Rennes Cedex 7 (FR)**

(54) **Source de tension de référence, capteur de température, détecteur de seuil de température, puce et système correspondant**

(57) L'invention concerne une source (104) de tension électrique de référence comprenant :

- une première source de courant électrique (PTAT 101) adaptée à produire un premier courant (I4) proportionnel à une température ; et
- une seconde source de courant électrique (CPTAT 102) adaptée à produire un second courant (I5) inversement proportionnel à la température.

Selon l'invention, les première et seconde sources de courant sont montées en parallèle et la source de tension comprend des moyens de sommation (R3) des premier et second courants produisant dans les moyens de sommation un courant de référence générant la tension de référence (VREF) aux bornes des moyens de sommation.

L'invention concerne également un capteur de température, un détecteur de seuil de température, une puce et un système correspondant.

Fig. 1

EP 1 380 914 A1

**Description**

Le domaine de l'invention est celui de l'électronique et de la microélectronique. Plus précisément, l'invention concerne des sources de tension de référence, fournissant une tension contrôlée en fonction de la température et ayant une faible tension d'alimentation et un faible courant de repos.

Plusieurs applications des sources de tension contrôlées en fonction de la température existent, notamment :

- les sources de tension ou de courant de référence délivrant une tension

ou un courant indépendant de la température ; et

- les sondes de température.

De telles sources de tension de référence (ou « bandgap» en anglais) sont notamment mises en oeuvre dans les équipements portables alimentés par batteries ou les systèmes utilisant des circuits électroniques complexes de hautes performances. Ces applications ont récemment augmenté avec notamment l'utilisation largement répandue des cartes à puce et des microcontrôleurs incorporés.

Un élément de base, essentiel pour ces applications est un circuit intégré (noté IC de l'anglais « Integrated Circuit ») nécessitant une source de tension et de courant de référence permettant de supporter la plupart des fonctions analogiques. Dans ces systèmes, il est souhaitable que cette référence de tension fonctionne à une tension d'alimentation relativement faible, par exemple de l'ordre de 1,2 à 3,0 volts. Il est également souhaitable qu'elle soit stable et sensiblement immunisée contre des variations de température, des variations d'alimentation et du bruit.

Un circuit appelé source de tension de référence peut être utilisé pour fournir cette référence stable désirée. Un tel circuit est particulièrement utilisé pour des applications diverses telles qu'un superviseur d'alimentation, une réinitialisation à la mise sous tension (ou POR de l'anglais « Power On Reset ») d'un appareil ou une conversion analogique/numérique. Toutefois, un inconvénient de la plupart des sources de tension de référence est qu'elle nécessite l'utilisation d'une alimentation en tension relativement plus élevée que la tension de référence produite (par exemple, une alimentation de l'ordre de 2,5 volts pour produire une tension de référence d'environ 1,25 volts).

Aussi, dans certains cas, on pallie cet inconvénient en utilisant deux sources de courant produisant chacune un courant ayant des variations opposées en fonction de la température :

- la première source produit un premier courant proportionnel à une température absolue ( ou PTAT de l'anglais « Proportionnal To Absolute Temperature ») ; et
- la seconde source produit un second courant inversement proportionnel à la température absolue ( ou CPTAT de l'anglais « Conversly Proportional To Absolute Temperature »).

Une telle source de tension de référence basée sur des courants PTAT/CPTAT est aussi décrite dans un article de la revue IEEE Journal of Solid-State Circuits, publié en mai 1999, intitulé "A CMOS bandgap reference circuit with sub-1-V operation" (ou « Une source de tension de référence CMOS fonctionnant à une tension inférieure à 1 Volt ») et écrit par Hiromeri Bomba, Hitoshi Shigs, Akira Unezawa, Takeshi Miyaba, Tocu Tanazawa, Shigeru Atsumi et Koji Sakui. Cette source de tension de référence est adaptée à des alimentations de faible tension.

En revanche, elle présente l'inconvénient de nécessiter l'utilisation d'au moins trois résistances de relativement grande valeur pour obtenir un faible courant de fonctionnement. Ainsi, dans certains processus, notamment dans des processus comportant des résistances en silicium polycristallin, la taille de ces résistances peut être prohibitive.

L'invention selon ses différents aspects a notamment pour objectif de pallier ces inconvénients de l'art antérieur.

Plus précisément, un objectif de l'invention est de fournir une source de tension fournissant une tension contrôlée en fonction de la température et ayant une faible tension d'alimentation et un faible courant de repos.

Un autre objectif de l'invention est de fournir une source de tension fournissant une tension contrôlée en fonction de la température, permettant une faible consommation tout en limitant la surface de silicium liées aux résistances électriques nécessaires à la réalisation de la source de tension.

Encore un autre objectif de l'invention est de permettre un réglage souple de la tension de référence désirée en fonction de l'application.

Un autre objectif de l'invention est également de fournir une source de tension compatible avec de nombreuses applications, notamment une source de tension de référence fournissant une tension de référence indépendante de la température ou une sonde de température basée sur l'utilisation de la source de tension.

Ces objectifs ainsi que d'autres qui apparaîtront par la suite sont atteints selon l'invention, à l'aide d'une source de tension électrique de référence comprenant :

- une première source de courant électrique adaptée à produire un premier courant proportionnel à une température comprise dans une plage de fonctionnement de la source ; et
- une seconde source de courant électrique adaptée à produire un second courant inversement proportionnel à la température; remarquable en ce que les première et seconde sources de courant sont montées en parallèle, et en ce que la source de tension comprend des moyens de sommation des premier et second courants produisant dans les moyens de sommation un courant de référence générant la tension de référence aux bornes des moyens de sommation.

Ainsi, dans une plage de fonctionnement de la source de tension comprise, préférentiellement entre -40°C et +105°C, les variations de la tension de référence sont connues en fonction des paramètres des différents éléments de la source. Dans certains cas, la source pourra être construite de sorte que les variations de la tension de référence dans la plage de fonctionnement seront négligeables, voire nulles. Ainsi, on peut obtenir des sources de tensions de références très précises avec une précision de l'ordre, par exemple, de +/-2%.

Selon une caractéristique particulière, la source de tension est remarquable en ce que les moyens de sommation comprennent au moins une première résistance électrique destinée à être parcourue par au moins une partie du courant de référence.

Ainsi, les moyens de sommation sont relativement simples à mettre en oeuvre tout en permettant une bonne précision dans une conversion courant/tension.

Selon une caractéristique particulière, la source de tension est remarquable en ce que la première source de courant comprend :

- des premiers moyens de génération de courant adaptés à produire au moins un troisième courant proportionnel à la température ; et
- un premier miroir de courant adapté à produire ledit premier courant en fonction du ou des troisièmes courants.

Selon une caractéristique particulière, la source de tension est remarquable en ce que les premiers moyens de génération de courant comprennent :

- au moins un premier amplificateur opérationnel et au moins un transistor adaptés à produire le ou les troisièmes courants ;
- au moins une résistance de polarisation adaptée à régler l'amplitude du

ou des troisièmes courants ; et

- au moins deux transistors bipolaires couplés de sorte que les tensions entre la base et l'émetteur des transistors soient reliées par une équation de type à jonction de diode dépendant de la température.

Selon une caractéristique particulière, la source de tension est remarquable en ce que les premiers moyens de génération de courant comprennent :

- un amplificateur opérationnel parmi le ou les premiers amplificateurs opérationnels, possédant des première et seconde entrées ;
- un premier transistor à effet de champ adapté à produire un quatrième courant ;
- un second transistor à effet de champ adapté à produire un cinquième courant ;
- une première résistance de polarisation adaptée à régler l'amplitude du cinquième courant ; et
- des premier et second transistors bipolaires couplés de sorte que les tensions entre la base et l'émetteur des transistors soient reliées par une équation de type à jonction de diode dépendant de la température, les collecteurs et les bases des transistors bipolaires étant reliés à un premier potentiel de tension ;
  les premier, second transistors à effet de champ formant avec un troisième transistor à effet de champ le premier miroir de courant de sorte que le premier courant est fonction des quatrième et cinquième courants ;
  le drain du premier transistor à effet de champ étant relié au premier transistor bipolaire et à la première entrée de l'amplificateur opérationnel ; le drain du second transistor à effet de champ étant relié à la seconde entrée de l'amplificateur opérationnel et à une première borne de la première résistance de polarisation ;
  la deuxième borne de la première résistance de polarisation étant reliée à l'émetteur du second transistor bipolaire ; et
  la sortie de l'amplificateur opérationnel étant reliée à chacune des grilles des premier, second et troisième transistors à effet de champ.

Selon une caractéristique particulière, la source de tension est remarquable en ce que la seconde source de courant comprend :

- des seconds moyens de génération de courant adaptés à produire au moins un sixième courant inversement proportionnel à la température ; et
- un second miroir de courant adapté à produire le second courant en fonction du ou des sixièmes courants.

Selon une caractéristique particulière, la source de tension est remarquable en ce que les seconds moyens de génération de courant comprennent :

- au moins un second amplificateur opérationnel et au moins un transistor adaptés à produire le ou les sixièmes courants ; et
- au moins une résistance de polarisation adaptée à régler l'amplitude du

ou des sixièmes courants.

Selon une caractéristique particulière, la source de tension est remarquable en ce que les seconds moyens de génération de courant comprennent :

- un amplificateur opérationnel parmi le ou les seconds amplificateurs opérationnel possédant des première et seconde entrées ;
- un quatrième transistor à effet de champ adapté à produire un septième courant ;
- une seconde résistance de polarisation adaptée à régler l'amplitude du septième courant ;
  le quatrième transistor à effet de champ formant avec un cinquième transistor à effet de champ le second miroir de courant de sorte que le second courant est fonction du septième courant ;
  le drain du quatrième transistor à effet de champ étant relié à la seconde entrée de l'amplificateur opérationnel et à la première borne de la seconde résistance de polarisation ;
  la deuxième borne de la seconde résistance de polarisation étant reliée au premier potentiel de tension ;
  la première entrée de l'amplificateur opérationnel étant reliée à l'émetteur du premier transistor bipolaire ;
  le drain du premier transistor à effet de champ étant reliée à la première entrée de l'amplificateur opérationnel parmi le ou les seconds amplificateur opérationnel ; et
  la sortie de l'amplificateur opérationnel étant reliée à chacune des grilles des quatrième et cinquième transistors à effet de champ.

Selon une caractéristique particulière, la source de tension est remarquable en ce qu'elle comprend, en outre :

- une source de polarisation permettant de fournir un courant de démarrage aux première et seconde source de courant et aux moyens de sommation ;
- des moyens de démarrage des première et seconde source de courant et des moyens de sommation, les moyens de sommation étant alimentés par la tension de démarrage.

Ainsi, selon l'invention, le courant de démarrage permet d'éviter un point d'équilibre à une tension de référence nulle.

Selon une caractéristique particulière, la source de tension est remarquable en ce que les moyens de démarrage comprennent des sixième, septième et huitième transistors à effet de champ, la grille de chacun des transistors étant alimentée par la tension de démarrage et la source de chacun des transistors étant alimentée par une tension d'alimentation de la source de tension ;

- le drain du sixième transistor à effet de champ étant connecté au drain du premier transistor à effet de champ ;
- le drain du septième transistor à effet de champ étant connecté au drain du second transistor à effet de champ ; et
- le drain du huitième transistor à effet de champ étant connecté au drain des troisième et cinquième transistors à effet de champ.

Selon une caractéristique particulière, la source de tension est remarquable en ce qu'une variation du second courant en fonction de la température compense une variation du premier courant en fonction de la température, de sorte que le courant de référence est indépendant de la température.

Ainsi, l'invention permet une mise en oeuvre relativement simple d'une source de tension de référence qui ne dépend pas de la température dans une plage de fonctionnement déterminée.

Selon une caractéristique particulière, la source de tension est remarquable en ce qu'une variation du second courant en fonction de la température ne compense pas une variation du premier courant en fonction de la température, de sorte que le courant de référence dépend de la température.

Selon une caractéristique particulière, la source de tension est remarquable en ce qu'une variation du courant de référence est proportionnelle à une variation de la température.

Ainsi, l'invention permet une mise relativement simple d'une source de tension de référence dont la variation dépend de la température selon une loi connue et prédéterminée.

L'invention concerne également un capteur de température et/ou détecteur de seuil de température comprenant une source de tension électrique telle que décrite précédemment, remarquable en ce que le capteur de température et/ou le détecteur de seuil de température comprennent, en outre, des moyens de mesure de la tension de référence.

Selon une caractéristique particulière, le capteur de température et/ou le détecteur de seuil de température sont remarquables en ce que le capteur de température et/ou le détecteur de seuil de température comprennent, en outre :

- des moyens de générer une tension indépendante de la température dans la plage de fonctionnement ; et
- des moyens de comparaison de la tension de référence et de la tension indépendante de la température.

Ainsi, l'invention permet une mise en oeuvre relativement simple d'un capteur et/ou d'un détecteur de température fiable et précis.

L'invention concerne aussi une puce électronique comprenant une source de tension telle que précédemment décrite.

En effet, les résistances de la source de tension selon l'invention sont généralement de relativement faibles valeur et permettent ainsi une mise en oeuvre sous forme d'une puce électronique relativement économique et fiable.

En outre, l'invention concerne un système comprenant une source de tension telle que précédemment décrite et un dispositif électronique alimenté par la source de tension.

Selon une caractéristique particulière, le dispositif électronique appartient au groupe comprenant :

- les convertisseurs analogiques/numériques et/ou numériques/analogiques ;
- les cartes à microprocesseur ;
- les radio-téléphones ;
- les circuits de régulation de charge de batterie ;
- les dispositifs électroniques dédiés aux véhicules ;
- les capteurs de températures ;
- les superviseurs d'alimentation électrique ;
- les dispositifs de conversion numérique/analogique et/ou analogique numérique ;
- les circuits de réinitialisation ;
- les dispositifs électroniques dédiés aux engins spatiaux ;
- les dispositifs électroniques dédiés aux engins militaires ; et
- les dispositifs audio ou audiovisuels.

Les avantages du capteur de température, du détecteur de seuil de température, de la puce et du système sont les mêmes que ceux de la source de tension, ils ne sont pas détaillés plus amplement.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 présente un synoptique de source de tension conforme à l'invention selon un mode particulier de réalisation ;
- la figure 2 illustre la source de tension de la figure 1 sans circuit de polarisation et de démarrage;
- la figure 3 décrit un circuit de polarisation tel qu'illustré en regard de la figure 1 ;
- la figure 4 illustre une source de tension selon la figure 1 et prévue pour fonctionner avec le circuit de polarisation selon la figure 3 ; et
- la figure 5 illustre un synoptique de capteur et/ou de détecteur de seuil de température comportant une source de tension conforme à l'invention selon un mode particulier de réalisation.

Le principe général de l'invention repose sur une source de tension de référence comprenant :

- une source de courant proportionnel à la température absolue (PTAT) ;

- une source de courant inversement proportionnel à la température absolue (CPTAT) ;
- des moyens de sommation permettant d'additionner le courant PTAT et le courant CPTAT pour produire une tension de référence à ses bornes (ces moyens de sommation peuvent comprendre, par exemple, une résistance de sommation).

Les sources de courant PTAT et CPTAT sont montées en parallèle et permettent ainsi l'utilisation d'une tension d'alimentation proche de la tension de référence produite.

La tension de référence fournie par la source peut être ajustée en réglant la valeur d'une résistance de sommation.

Lorsque les variations du courant CPTAT en fonction de la température compensent exactement les variations du courant PTAT, la somme des courants CPTAT et PTAT est indépendante de la température. Dans ce cas, la tension de référence aux bornes des moyens de sommation traversés par le courant obtenu en additionnant les courants CPTAT et PTAT est constante et elle aussi indépendante de la température. On peut donc utiliser la source de tension de référence comme une source fournissant une tension qui ne varie pas avec la température.

Lorsque, en revanche, par construction, les variations du courant CPTAT en fonction de la température ne compensent pas exactement les variations du courant PTAT, le courant de référence traversant les moyens de sommation varie également en fonction de la température. Dans ce cas, il est possible d'utiliser la source de tension de référence pour mesurer une température de milieu ambiant. Préférentiellement, les sources de courant sont adaptées pour que ces variations de courant restent proportionnelles aux variations de température, la somme des courants CPTAT et PTAT variant alors proportionnellement à la variation de la température. Dans ce cas, le courant de référence aux bornes des moyens de sommation traversés par le courant obtenu en additionnant les courants CPTAT et PTAT varie lui aussi proportionnellement à la variation de la température. Si les moyens de sommation sont constitués d'une ou plusieurs résistances, la tension de référence varie également proportionnellement avec la température, ce qui permet une mise en oeuvre relativement simple d'une sonde de température.

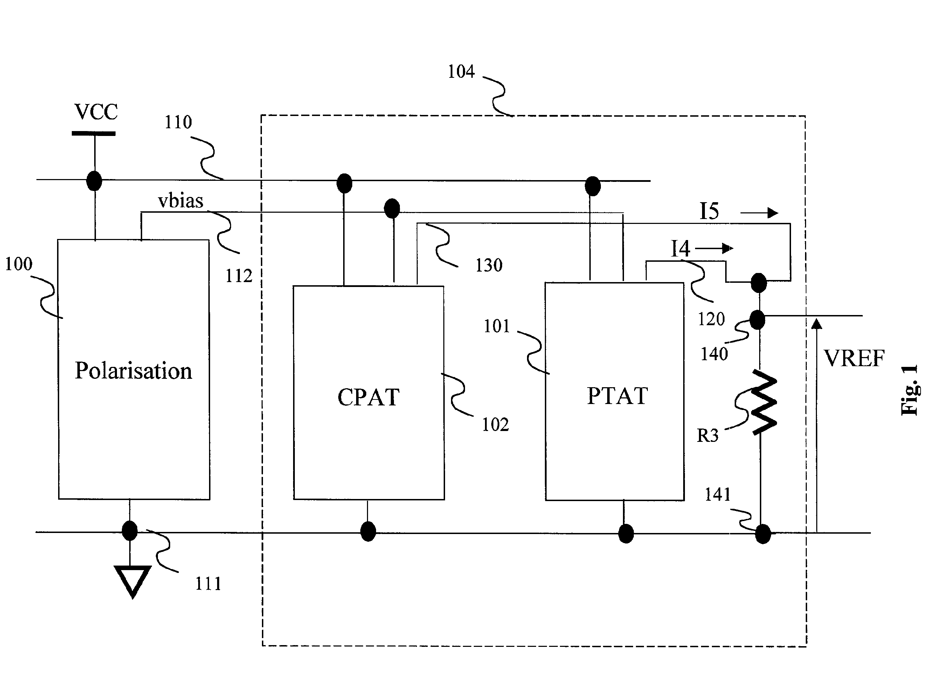

On présente, en relation avec la figure 1 un synoptique général de dispositif de source de tension conforme à l'invention selon un mode particulier de réalisation.

Le dispositif comprend :

- une source de tension 104 fournissant une tension de référence VREF ; et
- un module de polarisation et de démarrage 100.

La source de tension 104 et le module de polarisation 100 sont alimentés par une tension VCC 110 et reliés à une masse 111.

Le module de polarisation 100 fournit une tension de polarisation et de démarrage vbias via une liaison 112.

La source de tension 104 comprend :

- une source de courant proportionnel à la température absolue (PTAT) 101 ;
- une source de courant inversement proportionnel à la température absolue (CPTAT) 102 ; et
- une résistance électrique de sommation R3.

Les sources de courant 101 et 102 sont reliées au potentiel VCC via la liaison 110, à la masse 111 et à la tension de polarisation et de démarrage vbias 112.

La source de courant PTAT 101 fournit un courant I4 sur une sortie 120.

La source de courant CPTAT 102 fournit un courant I5 sur une sortie 130.

Les sorties 120 et 130 sont reliées à une borne 140 de la résistance R3, l'autre borne 141 de la résistance R3 étant reliée à la masse 111. Les deux courants PTAT I4 et CPTAT I5 sont donc ajoutés dans la résistance R3.

La tension VREF est prise entre les bornes 140 et 141 de la résistance R3. Ainsi, comme indiqué précédemment, si la variation du courant PTAT en fonction de la température est compensée exactement par la variation du courant CPTAT, la somme des deux courants traversant ici la résistance R3 est constant et la tension VREF fournie aux bornes de la résistance R3 est donc constante.

Si en revanche, la somme des courants PTAT et CPTAT varie en fonction de la température, la mesure de la tension VREF aux bornes 140 et 141 de la résistance R3 permet de déterminer la température (fonctionnement en sonde de température).

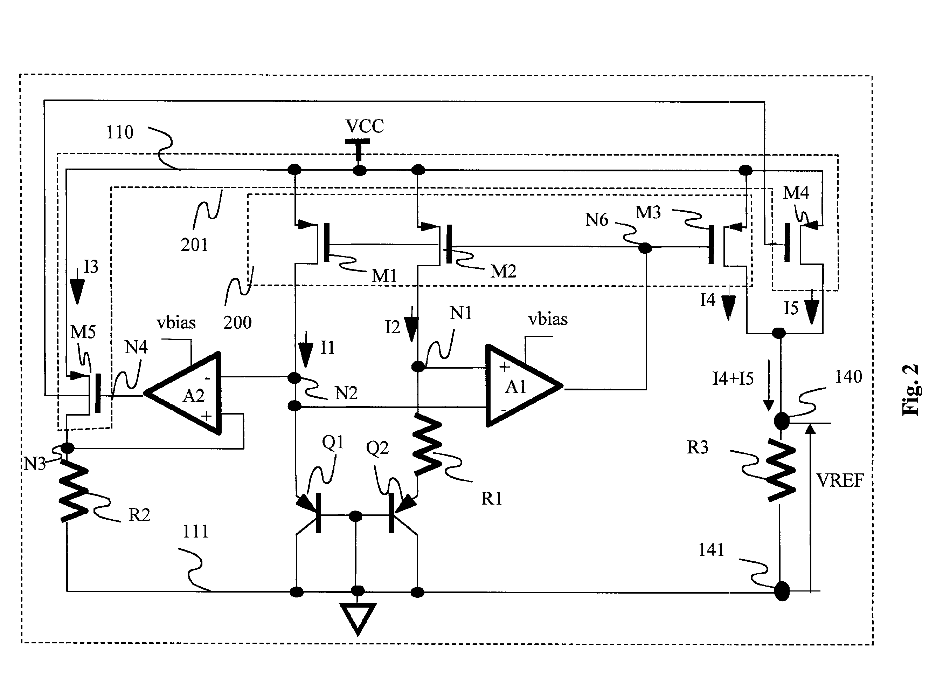

La figure 2 illustre la source 104 de tension de référence selon un mode de réalisation de l'invention. Afin de montrer clairement le fonctionnement de la source 104, les circuits propres à la polarisation et au démarrage ne sont pas représentés. La source 104 peut fonctionner sans courant de démarrage mais il y a un risque que, dans ce cas, certains composants de la source 104 restent collés à une tension nulle. Afin de pallier cet inconvénient, il est donc préférable d'imposer un courant de démarrage.

Comme indiqué précédemment, la source 104 de tension de référence comprend :

- une source de courant proportionnel à la température absolue (PTAT) 101 ;
- une source de courant inversement proportionnel à la température absolue (CPTAT) 102 ; et
- une résistance électrique de sommation R3. La source de courant PTAT 101 comprend :

- un premier miroir de courant 200 comportant trois transistors à effet de champs (ou FET de l'anglais « Field Effect Transistor ») MOS M1, M2 et M3 ;
- une résistance R1 ;
- une paire de transistors bipolaires semi-conducteurs PNP Q1 et Q2 ayant respectivement des tailles SQ1 et SQ2 ; et
- un premier amplificateur opérationnel A1.

La résistance de charge R3 est connectée à la sortie des deux miroirs de courant 200 et 201 via la borne 140.
Les transistors MOS M1, M2 et M3 sont couplés de façon à constituer le premier miroir de courant 200 :

- les sources des transistors M1, M2 et M3 sont connectées au potentiel VCC (liaison 110) ;
- le drain du transistor M1 est connecté à un noeud N2 et fournit un courant I1 ;
- le drain du transistor M2 est connecté à un noeud N1 et fournit un courant I2 ;
- le drain du transistor M3 est connecté à la borne 140 de la résistance R3 et fournit un courant I4 ; et
- les grilles des transistors M1, M2 et M3 sont reliées à la sortie de l'amplificateur opérationnel A1.

Ici, les amplificateurs opérationnels se réfèrent à des dispositifs qui comparent directement deux niveaux de tension ou deux signaux de tension et fournissent une réponse de signal de tension de sortie amplifiée basée sur la comparaison des signaux de tension.
Selon des techniques connues de l'homme du métier, le courant traversant un transistor FET MOS est proportionnel à la largeur de grille du dispositif. Le rapport entre le courant I1 et le courant I2 (respectivement le courant I3) est ainsi déterminé par le rapport des dimensions des grilles des transistors MOS M1 et M2 (respectivement M3). Les transistors MOS M1, M2 et M3 ont une largeur de grille égale. Ainsi, à titre illustratif, :

- le courant I1, par exemple, approximativement égal à 1 µA circule à travers le noeud N2 ;
- le courant I2, par exemple, approximativement égal 1 µA circule à travers le noeud N1 ; et
- le courant I4, par exemple, approximativement de 1 µA circule à travers le transistor MOS M3.

Les transistors MOS M1, M2 et M3 ont des grilles couplées électriquement à la comparaison de tension au noeud N6, produite par l'amplificateur A1. La tension au noeud N6 étant fournie par l'amplificateur A1, les tensions grille-source des transistors MOS M1, M2 et M3 sont sensiblement égales et les transistors MOS M1, M2 et M3 fonctionnent à ou près d'une région de saturation pendant le fonctionnement de la source de tension 104.
L'entrée négative de l'amplificateur A1 est connectée au noeud N2 alors que l'entrée positive de l'amplificateur A1 est reliée au noeud N1. La sortie de l'amplificateur A1 est connectée au noeud N6. L'amplificateur A1 est alimenté par la tension vbias. Ainsi, l'amplificateur A1 compare la tension entre les noeuds N2 et N1.
L'amplificateur A1, en actionnant le transistor FET MOS M2 pour fournir un courant I2, provoque l'apparition d'une tension VR1 aux bornes de la résistance R1. De plus, la réinjection de la tension VN2 fournie à l'amplificateur A1 a pour conséquence que les tensions électriques aux noeuds N1 et N2 sont approximativement égales.
Deux transistors bipolaires Q1 et Q2 PNP sont respectivement couplés aux courants I1 et I2. L'émetteur du transistor Q1 est directement relié au noeud N2. L'émetteur du transistor Q2 est relié au noeud N1 via une résistance R1. Le collecteur et la base des transistors Q1 et Q2 sont reliés à la masse 111.
La relation des transistors Q1 et Q2 suit sensiblement une équation de jonction de diode. La tension base-émetteur sur chaque transistor de la paire de transistors PNP Q1 et Q2 est fournie par l'équation :

$$VBE\_Q1 = VBE\_Q2 + kT/q*ln(J1/J2) \tag{1}$$

où :

- J1 est la densité de courant traversant le transistor Q1 ;
- J2 est la densité de courant traversant le transistor Q2 ;
- kT/q est la tension thermique, k étant la constante de Boltzman, T étant la température absolue et q étant la charge de l'électron ($1,6.e^{-19}$ coulombs) ;
- VBE_Q1 est la tension base-émetteur du transistor Q1 ;
- et VBE_Q2 est la tension base-émetteur du transistor Q2.

Les densités de courant J1 et J2 peuvent être ajustées en modifiant le rapport des surfaces des émetteurs des transistors Q1 et Q2. Selon le mode de réalisation décrit, les courants I1 et I2 sont identiques et la surface de l'émetteur du transistor Q2 est égale à huit fois celle de l'émetteur du transistor Q1.

De plus, puisque les tensions sur les noeuds N1 et N2 sont sensiblement égales, la tension base-émetteur aux bornes du transistor PNP Q1 est sensiblement égale à la tension base-émetteur aux bornes du transistor PNP Q2 à laquelle s'ajoute la tension aux bornes de la résistance R1. Une différence de tension respectivement entre les tensions base-émetteur VBE_Q1 et VBE_Q2 des transistors PNP Q1 et Q2 apparaît sous la forme d'une tension V_R1 aux bornes de la résistance de charge R1 suivant la relation :

$$V\_R1 = VBE\_Q1 - VBE\_Q2 \qquad (2)$$

La combinaison des équations (1) et (2) donne :

$$V\_R1 = kT/q*ln(J1/J2) \qquad (3)$$

Puisque la largeur et la longueur des dispositifs MOS M1, M2 et M3 dans le miroir de courant 104 sont identiques, le courant dans les transistors M1, M2 et M3 sont donné par :

$$I\_PTAT = (kT/qR1)*ln(J1/J2) \qquad (4)$$

A titre illustratif, si, par exemple :

- la valeur de la résistance R1 est fixée à 56 k$\Omega$ ;
- le rapport des tailles des émetteurs des dispositifs PNP Q1/Q2 est égal à 8 ; et
- le rapport des tailles des dispositifs MOS M1/M2 vaut 1 ; alors,
- selon la relation (3) la tension V_R1 est égale à :

$$V\_R1 = (kT/q).ln(8) = (1,3810^{-23}.300/1,610^{-19}).ln8 = 54 \text{ mV}$$

à une température T valant 300K ; et
- selon la relation (4), le courant I_PTAT vaut V_R1/R1 = 1 $\mu$A. La source de courant CPTAT 102 comprend :

- un second miroir de courant 201 comportant deux transistors à effet de champs MOS M4 et M5 ;
- un second amplificateur opérationnel A2 avec un miroir de courant commandant la sortie 130 ; et
- une résistance de charge R2 connectée à une entrée de réinjection.

La source de courant CPTAT 102 est utilisée :

- d'abord comme suiveur de tension pour fournir une tension VNG égale à la tension aux bornes du dispositif PNP Q1 ;
- puis comme source de courant à "coefficient de température négatif" pour fournir à travers le second miroir de courant 201 un courant égal au courant dans la résistance R2.

Les transistors MOS M4 et M5 sont couplés de façon à constituer le deuxième miroir de courant 201, la source et la grille du transistor M5 étant respectivement connectées à la source et à la grille du transistor M4 :

- les sources des transistors M4 et M5 sont connectées au potentiel VCC (liaison 110) ;
- le drain du transistor M5 est connecté à un noeud N3 et fournit un courant 13 ;
- le drain du transistor M4 est connecté à la borne 140 de la résistance R3 et fournit un courant I5 ; et
- les grilles des transistors M4 et M5 sont reliées à la sortie de l'amplificateur opérationnel A2.

Le rapport entre le courant I3 et le courant I5 est déterminé par le rapport des dimensions des grilles des transistors MOS M4 et M5. Les transistors MOS M4 et M5 ont une largeur de grille identique de sorte que le courant I5 dans le transistor M4 est identique au courant I3 dans le transistor M5.

Ainsi, à titre illustratif, :

- le courant I3, par exemple, approximativement égal à 1 µA circule à travers le noeud N3 ; et
- le courant I5, par exemple, approximativement de 1 µA circule à travers le transistor MOS M3.

Les transistors MOS M4 et M5 ont des grilles couplées électriquement à la comparaison de tension au noeud N4, produite par l'amplificateur A2. La tension au noeud N4 étant fournie par l'amplificateur A2, les tensions grille-source des transistors MOS M4 et M5 sont sensiblement égales et les transistors MOS M4 et M5 fonctionnent à ou près d'une région de saturation pendant le fonctionnement de la source de tension 104.

L'entrée positive de l'amplificateur A2 est connectée au noeud N3 alors que l'entrée négative de l'amplificateur A2 est reliée au noeud N2. La sortie de l'amplificateur A2 est connectée au noeud N4. L'amplificateur A2 est alimenté par la tension vbias.

La résistance R2 relie la masse 111 au noeud N3 qui correspond à la sortie d'un suiveur de tension.

Le suiveur de tension est réalisé en utilisant l'amplificateur A2 et le transistor MOS M5.

L'amplificateur A2 et la première partie du second miroir de courant 105 sont connectés comme suit pour former le suiveur de tension :

- l'entrée négative de l'amplificateur A2 est connectée au transistor Q1 via le noeud N2 ;
- l'entrée positive de l'amplificateur A2 est connectée au drain du transistor M5 et à la résistance de charge R2 via le noeud N3 ;
- la sortie de l'amplificateur A2 est connectée à la grille du transistor M5 via un noeud N4 ; et
- la source du transistor M5 est connecté à l'alimentation VCC via la liaison 110.

Comme la largeur et la longueur de M5 et M4 sont identiques, le courant dans la résistance R2 et le miroir 201 est alors fourni par l'équation :

$$I\_CPTAT = VBE\_Q1/R2 \qquad\qquad (5)$$

où VBE_Q1 représente la tension base-émetteur du transistor Q1

A titre illustratif, R2 est préférentiellement comprise entre 100 et 500kΩ et est,par exemple, fixée à 420 kΩ, ainsi, I_CPTAT vaut 1,9 µA.

La résistance R3 est utilisée pour additionner les courants I_PTAT et I_CPTAT. En combinant les relations (4) et (5), la tension aux bornes de la résistance R3 est alors donnée par l'équation :

$$VREF = R3*(VBE\_Q1/R2+(kT/qR1)*ln(J1/J2)) \qquad\qquad (6)$$

Ainsi, VREF est la somme de deux termes :

- une tension proportionnelle à VBE_Q1 et qui varie donc de manière opposée aux variations de température (il y a diminution de VBE_Q1 lorsque la température T augmente) ; et
- une tension qui varie proportionnellement à la température.

A titre illustratif, selon le mode de réalisation décrit, les valeurs des paramètres relatifs aux composants utilisés sont les suivants :

- les résistances R1, R2 et R3 possèdent préférentiellement une valeur comprise en 100 et 500kΩ et ont, à titre illustratif, respectivement pour valeur 56kΩ, 420kΩ et 332kΩ ;
- le rapport de la surface de l'émetteur de Q2 sur la surface de l'émetteur de Q1 est égal à 8 ; et
- les transistors M1, M2, M3, M4 et M5 ont une largeur de grille W égale à 120 µm et une longueur de grille L égale à 40 µm.

Ainsi, à une température T valant 300K, la tension VBE_Q1 est voisine de 0,6V (moitié de la bande interdite du silicium pour des transistors bipolaires) et selon la relation (6) :

$$VREF = 332.10^3(VBE\_Q1/420.10^3+5410^{-3}/56.10^3)\# 332(0{,}6/420+10^{-3})$$

soit VREF = 0,8V.

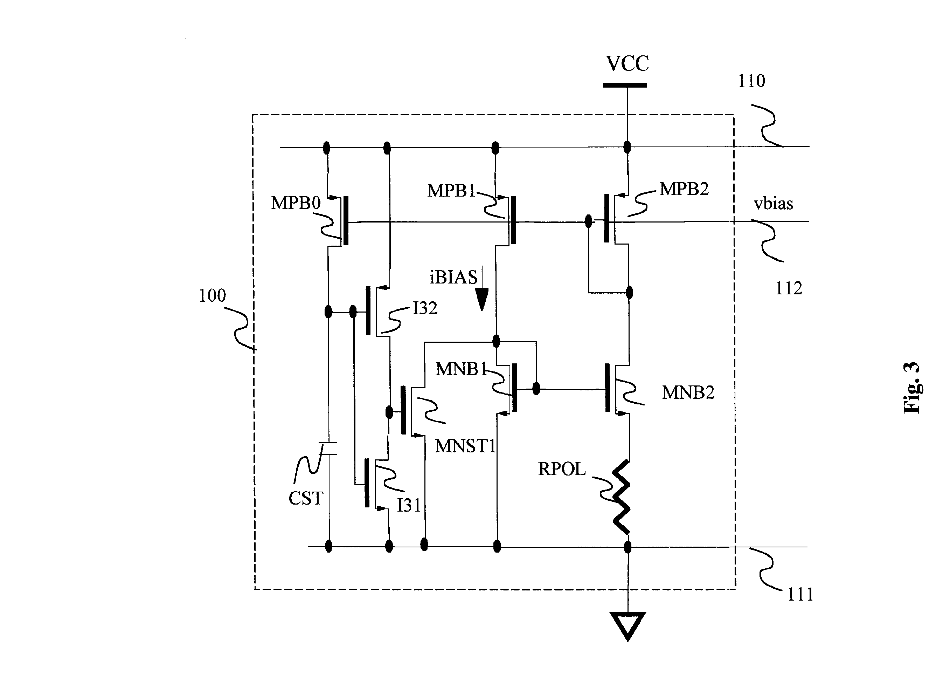

La figure 3 décrit un circuit de polarisation et de démarrage 100 tel qu'illustré en regard de la figure 1. Le circuit de polarisation et de démarrage 100 est une source de courant ayant pour avantage de fournir un courant stable lorsque la tension d'alimentation VCC varie. Ainsi, le courant dans chacun des amplificateurs A1 et A2 est également stable, ce qui permet des performances (notamment en matière d'offset) stables et une bonne précision de la tension de référence fournie.

Le circuit de polarisation et de démarrage 100 comprend :

- des transistors MPB0, MPB1, MPB2, I31, I32, MNST1, MNB1 et MNB2 ;
- une résistance électrique RPOL ; et
- un condensateur CST.

La source de chacun des transistors MPB0, MPB1, MPB2 et I32 est reliée à la tension d'alimentation VCC.
MNB1 et MNB2 sont constitués respectivement de 4 et 16 transistors identiques montés en parallèle. Afin de simplifier la représentation, seul un transistor MNB1 et un transistor MNB2 ont été représentés en regard de la figure 3.
La grille de chacun des transistors MPB0, MPB1 et MPB2, le drain du transistor MPB2 et le drain des transistors MNB2 sont connectés à la sortie vbias du circuit de polarisation 100.
Le drain du transistor MPB1 est relié au drain de chacun des transistors MNST1 et MNB1 et à la grille de chacun des transistors MNB1 et MNB2. Le drain du transistor MPB1 fournit un courant iBIAS.
Le drain du transistor MPB0 est connecté à l'une des bornes du condensateur CST (l'autre borne de cet élément étant relié à la masse 111) ainsi qu'à la grille de chacun des transistors I31 et I32.
Le drain du transistor I32 est connecté à la grille du transistor MNST1 et au drain du transistor I31.
La source de chacun des transistors MNST1 et MNB1 est reliée à la masse 111.
La source de chacun des transistors MNB2 est reliée à l'une des bornes de la résistance RPOL dont l'autre borne est reliée à la masse 111.
Les courants fournis par le transistor MPB1 (courant noté I_MPB1) et par les transistors MNB (courant noté I_MNB1) sont donnés par la relation:

$$iBIAS = I\_MPB1 = I\_MNB1 = (1-n/m)^2/(n*uC0/2*W/L\_NB1*RPOL^2)$$

avec

- m = (W/L_NB2)/(W/L_NB1)
- n = (W/L_PB2)/(W/L_PB1)

où :

- les paramètres L_NB1 et L_NB2 représentent la longueur de la grille (c'est-à-dire la distance entre le drain et la source) des transistors respectivement MNB 1 et MNB2 ; et
- le paramètre W leur largeur.

Ce type de source de courant nécessite un circuit de démarrage. Celui-ci est réalisé par le transistor MNST1. MNST1 est désactivé par le transistor 131 après que le condensateur CST a été chargé à la tension VCC par le transistor MPB0.
A titre illustratif, selon le mode de réalisation décrit, les valeur des paramètres des composant du circuit de polarisation 100 sont les suivants :

- la capacité du condensateur CST est supérieure ou égale à 1 pF pour éviter les capacités parasites et, par exemple, choisie égale à 1 pF ;
- la résistance intégrée en poly silicium RPOL vaut 120 kΩ ;
- la largeur de la grille des transistors MPB0, MPB1 et MPB2 vaut 10 μm, et leur longueur 1,26 μm ;
- la largeur de la grille des transistors I31 et I32 vaut respectivement 2,5 μm et 5 μm et leur longueur 0,35 μm ;
- la largeur de la grille du transistor MNST1 vaut 4,9 μm et sa longueur 0,35 μm ;
- la largeur et la longueur de la grille de chaque transistor MNB1 et MNB2 valent respectivement 26 μm et 1,2 μm.

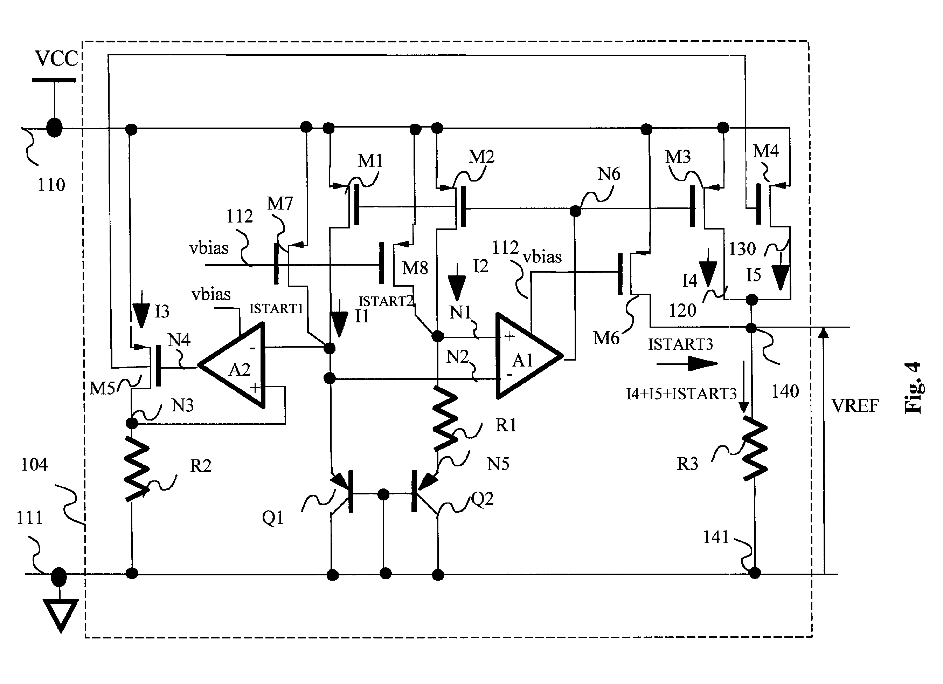

La figure 4 illustre une source de tension 104 selon la figure 1 et prévue pour fonctionner avec le circuit de polarisation 100 décrit en regard de la figure 3.

La source de tension 104 de la figure 4 comprend :

- les éléments de la source de tension 104 illustrée en regard de la figure 2 ; et
- des transistors FET M6, M7 et M8.

Les éléments communs aux sources de tension illustrées en regard des figure 2 et 4 étant les mêmes, ils ne sont pas décrits davantage.

Les transistors M6, M7 et M8 permettent un démarrage correct de la source de tension 104. A titre illustratif a largeur de la grille des transistors M6, M7 et M8 vaut 10 $\mu$m, et leur longueur 1,26 $\mu$m, ces dimensions étant identiques à celles des transistors MPB0, MPB1 et MPB2.

La source de chacun des transistors M6, M7 et M8 est reliée à l'alimentation VCC.

La grille de chacun des transistors M6, M7 et M8 est connectée à la tension de polarisation vbias.

Les transistors M6, M7 et M8 sont donc montés en miroir de courant.

Le drain du transistor M7 (respectivement M8) est connecté au noeud N2 (respectivement N1) et fournit un courant ISTART1 (respectivement ISTART2).

Le drain du transistor M6 est connecté au noeud 140 et fournit un courant ISTART3 voisin de ISTART 2 et ISTART 1.

L'amplificateur A1 de la source PTAT agit sur le noeud N6 pour que les potentiels respectivement aux points N1 et N2 soient identiques. En théorie, il existe deux points de fonctionnement où les potentiels aux points N1 et N2 sont identiques :

- un point non souhaité à courant nul ; et
- un point à courant non nul qui convient.

Le circuit de démarrage 100 permet d'avoir un courant non nul aux points N1 et N2 et donc d'éviter le point de fonctionnement à courant nul.

Par ailleurs, la somme des trois courants, I4, I5 et ISTART 3 parcourt la résistance R3.

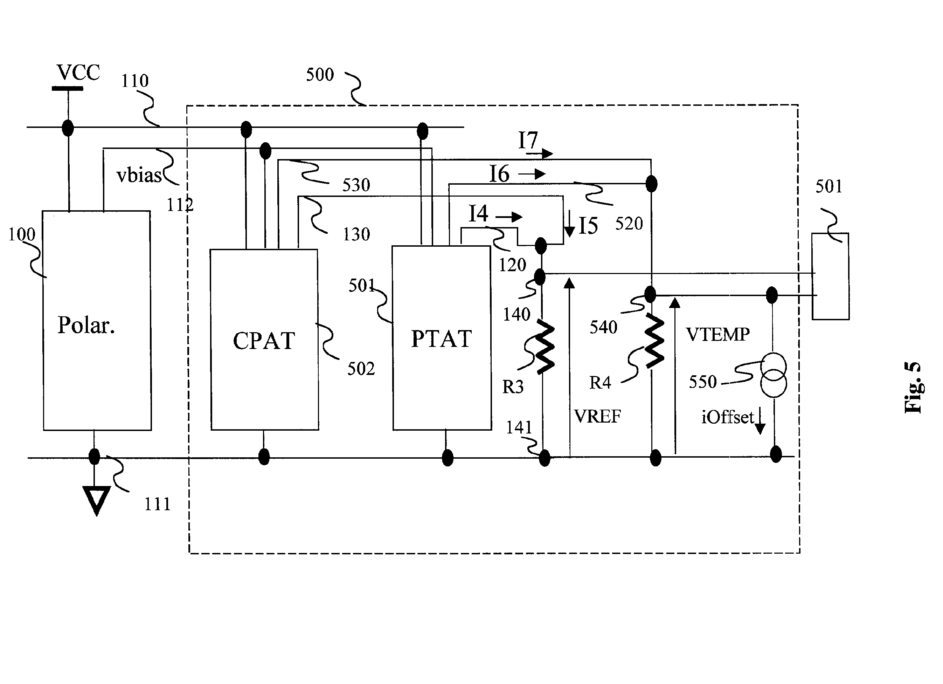

La figure 5 illustre un synoptique de capteur de température et/ou de détecteur de seuil de température comportant une source de tension adaptée à la mesure de température.

Le capteur et/ou détecteur comprend des éléments similaires aux éléments de la source de tension illustré en regard de la figure 1 ; ces éléments portent donc les mêmes références et ne seront pas décrit davantage.

Il comprend notamment :

- un circuit de polarisation 100 ;
- une source de tensions 500 ; et
- un module de mesure et/ou de détection 501.

Le circuit de polarisation 100 est adapté à fournir une tension de polarisation vbias à la source de tensions 500.

La source de tensions 504 est adaptée à fournit deux tensions :

- une tension de référence VREF, indépendante de la température ; et
- une tension VTEMP permettant de déterminer une température ambiante.

La source de tensions 504 comprend :

- une source de courant proportionnel à la température absolue (PTAT) 501 ;
- une source de courant inversement proportionnel à la température absolue (CPTAT) 502 ;
- deux résistances électriques de sommation R3 et R4 ; et
- une source de courant 550.

Les sources de courant PTAT 501 et CPTAT 502 font partie de la sonde du capteur et/ou détecteur qui est plongée dans le milieu dont on veut mesurer la température et/ou détecter une valeur supérieure à un seuil prédéterminé. Selon le mode de réalisation décrit le circuit de polarisation 100, le module 501, les résistances R3 et R4 ainsi que la source 550 ne sont pas partie de la sonde elle-même mais sont séparés. Selon une variante, le capteur et/ou détecteur sont réalisés dans un seul bloc et tous les éléments du circuit de polarisation 100, de la source 500 et du module 501 appartiennent à la sonde qui est plongée dans le milieu dont on souhaite mesurer la température et/ou détecter une valeur de température supérieure à un seuil prédéterminé.

Les sources de courant 501 et 502 sont reliées au potentiel VCC via la liaison 110, à la masse 111 et à la tension de polarisation et de démarrage vbias 112.

La source de courant PTAT 501 fournit :

- un courant I4 sur une sortie 120 ; et
- un courant I6 sur une sortie 520.

La source de courant PTAT 501 est similaire à la source 101 précédemment illustrée en regard des figures 2 et 4, à l'exception du miroir de courant 200 qui comprend en outre un transistor M33 dont la source et la grille sont reliées en parallèle respectivement avec la source et la grille du transistor M3.

La surface de grille du transistor M33 n'est pas la même que la surface de grille du transistor M3. Ainsi, les courants I4 et I6 fournis respectivement par les transistors M3 et M33 sont différents. Si la taille de la grille de M33 est plus grande que celle de M3, le courant I6 variera avec un coefficient de température positif.

La source de courant CPTAT 502 fournit :

- un courant I5 sur une sortie 130 ; et
- un courant I7 sur une sortie 520.

La source de courant CPTAT 502 est similaire à la source 102 précédemment illustrée en regard des figures 2 et 4, à l'exception du miroir de courant 201 qui comprend en outre un transistor M44 dont la source et la grille sont reliées en parallèle respectivement avec la source et la grille du transistor M4.

Les transistors M4 et M44 possèdent des largeurs et longueurs de grille identiques. Ainsi, le courant I7 fourni par le transistor M44 est identique au courant I5 fourni par le transistor M4.

Les sorties 120 et 130 et la sortie du transistor M6 sont reliées à une borne 140 de la résistance R3, l'autre borne 141 de la résistance R3 étant reliée à la masse 111. Les trois courants PTAT I4, CPTAT I5 et ISTART3 sont donc ajoutés dans la résistance R4.

La tension VREF est prise entre les bornes 140 et 141 de la résistance R3. Ainsi, la variation du courant PTAT en fonction de la température est compensée exactement par la variation du courant CPTAT, la somme des trois courants traversant ici la résistance R3 est constante et la tension VREF fournie aux bornes de la résistance R3 est donc constante.

La tension VTEMP est prise entre les bornes 540 et 141 de la résistance R4. La somme des courants PTAT et CPTAT variant en fonction de la température, la mesure de la tension VTEMP aux bornes 540 et 141 de la résistance R4 permet de déterminer la température.

Une source 550 de courant iOffset entre les bornes 540 et 141 permet de régler l'offset de la sonde de température via la tension VTEMP. Ainsi, on peut calibrer le capteur et/ou détecteur en fonction d'une température de référence (on peut, par exemple, choisir une différence de tension nulle entre VREF et VTEMP à une température T égale à 300K).

Le module de mesure et/ou de détection 501 comporte deux entrées reliées respectivement aux bornes :

- 140 (au potentiel VREF indépendant de la température ) ; et
- 540 (au potentiel VTEMP fonction de la température).

Ainsi, pour un fonctionnement en sonde de température, le module de mesure 501 comprend un convertisseur analogique/numérique avec une précision de, par exemple, 10 bits et fournit sur une sortie numérique à 10 bits, une valeur de la différence de tension (VTEMP-VREF) qui peut être convertie directement en une valeur de température.

De même, pour un fonctionnement en détection de seuil de température, le module de mesure 501 comprend un comparateur des tensions VTEMP et VREF et fournit sur une sortie numérique à un seul bit, une valeur égale à un si la température mesurée est supérieure à un seuil de température prédéterminé (valeur de la température lorsque les deux tensions VTEMP et VREF sont égales) ou zéro sinon.

Bien entendu, l'invention n'est pas limitée aux exemples de réalisation mentionnés ci-dessus.

En particulier, l'homme du métier pourra apporter toute variante dans la définition du circuit de polarisation qui permet de fournir une tension de démarrage et de polarisation constante.

Par ailleurs, de nombreuses variantes existent pour les sources de courant PTAT ou CPTAT. On pourra notamment remplacer les transistors bipolaires Q1 et Q2 par des transistors MOS.

On note que la source de tension ne se limite pas à la fourniture de tension de référence VREF indépendante de la température mais qu'elle peut fournir une tension de référence VREF dont la variation est connue en fonction de la température, ce qui permet de nombreuses applications, par exemple dans le domaine des sondes de températures, dans le domaine des dispositifs de charge de batterie (la tension de charge variant également avec la température).

Les capteurs de température et les détecteurs de température ne se limitent pas selon le mode de réalisation de l'invention illustré en regard de la figure 5 mais concerne toutes les variantes permettant de fournir une tension dépendante de la température selon une loi connue. Elle concerne notamment des variantes du dispositif illustré en regard de la figure 5 mettant en oeuvre au moins deux sources de tensions combinées (cas du mode de réalisation de la figure 5) ou juxtaposées (c'est-à-dire séparées ou indépendantes) dont une source de tension indépendante de la température dans la plage de fonctionnement du dispositif et au moins une source de tension fournissant au moins une tension dépendant de la température. Elle concerne aussi des variantes permettant de fournir au moins une tension dépendante de la température utilisant par exemple des composants permettant de contrôler la tension en fonction de la température (par exemple, transistors possédant des surfaces adaptées ou résistances adaptées).

**Revendications**

1. Source (104) de tension électrique de référence comprenant :

   - une première source de courant électrique (PTAT 101) adaptée à produire un premier courant proportionnel (I4) à une température comprise dans une plage de fonctionnement de ladite source ; et
   - une seconde source de courant électrique (CPTAT 102) adaptée à produire un second courant (I5) inversement proportionnel à ladite température;

   **caractérisée en ce que** lesdites première et seconde sources de courant sont montées en parallèle, et **en ce que** ladite source de tension comprend des moyens de sommation (R3) desdits premier et second courants produisant dans lesdits moyens de sommation un courant de référence générant ladite tension de référence (VREF) aux bornes desdits moyens de sommation.

2. Source de tension électrique selon la revendication 1, **caractérisée en ce que** lesdits moyens de sommation comprennent au moins une première résistance électrique (R3) destinée à être parcourue par au moins une partie dudit courant de référence(I4+I5).

3. Source de tension électrique selon l'une quelconque des revendications 1 à 2, **caractérisée en ce que** ladite première source de courant comprend :

   - des premiers moyens de génération de courant adaptés à produire au moins un troisième (I1, I2) courant proportionnel à ladite température ; et
   - un premier miroir de courant adapté à produire ledit premier courant (I4) en fonction dudit au moins un troisième courant (I1, I2).

4. Source de tension électrique selon la revendication 3, **caractérisée en ce que** lesdits premiers moyens de génération de courant comprennent :

   - au moins un premier amplificateur opérationnel (A1) et au moins un transistor (M1, M2) adaptés à produire ledit au moins un troisième courant ;
   - au moins une résistance de polarisation (R1) adaptée à régler l'amplitude dudit au moins un troisième courant ; et
   - au moins deux transistors bipolaires (Q1, Q2) couplés de sorte que les tensions entre la base et l'émetteur desdits transistors soient reliées par une équation de type à jonction de diode dépendant de ladite température.

5. Source de tension électrique selon la revendication 4, **caractérisée en ce que** lesdits premiers moyens de génération de courant comprennent

   - un amplificateur opérationnel (A1) parmi ledit au moins premier amplificateur opérationnel, possédant des première et seconde entrées ;
   - un premier transistor (M1) à effet de champ adapté à produire un quatrième courant (I1) ;
   - un second transistor (M2) à effet de champ adapté à produire un cinquième courant (I2) ;
   - une première résistance de polarisation (R1) adaptée à régler l'amplitude dudit cinquième courant ; et
   - des premier et second transistors bipolaires (Q1, Q2) couplés de sorte que les tensions entre la base et l'émetteur desdits transistors soient reliées par une équation de type à jonction de diode dépendant de ladite température, les collecteurs et les bases desdits transistors bipolaires étant reliés à un premier potentiel de tension ;

lesdits premier, second transistors à effet de champ formant avec un troisième transistor (M3) à effet de champ ledit premier miroir de courant de sorte que ledit premier courant (I4) est fonction desdits quatrième et cinquième courants ; le drain dudit premier transistor à effet de champ étant relié audit premier transistor bipolaire et à ladite première entrée dudit amplificateur opérationnel ; le drain dudit second transistor à effet de champ étant relié à ladite seconde entrée dudit amplificateur opérationnel et à une première borne de ladite première résistance de polarisation ;

la deuxième borne de ladite première résistance de polarisation étant reliée à l'émetteur dudit second transistor bipolaire ; et

la sortie dudit amplificateur opérationnel étant reliée à chacune des grilles des premier, second et troisième transistors à effet de champ.

**6.** Source de tension électrique selon l'une quelconque des revendications 1 à 5, **caractérisée en ce que** ladite seconde source de courant comprend :

- des seconds moyens de génération de courant adaptés à produire au moins un sixième courant (I3) inversement proportionnel à ladite température ; et
- un second miroir de courant adapté à produire ledit second courant (I5) en fonction dudit au moins un sixième courant.

**7.** Source de tension électrique selon la revendication 6, **caractérisée en ce que** lesdits seconds moyens de génération de courant comprennent :

- au moins un second amplificateur opérationnel (A2) et au moins un transistor (M5) adaptés à produire ledit au moins un sixième courant ; et
- au moins une résistance de polarisation (R2) adaptée à régler l'amplitude dudit au moins un sixième courant .

**8.** Source de tension électrique selon les revendications 5 et 7, **caractérisée en ce que** lesdits seconds moyens de génération de courant comprennent :

- un amplificateur opérationnel parmi ledit au moins second amplificateur opérationnel possédant des première et seconde entrées ;
- un quatrième transistor (M5) à effet de champ adapté à produire un septième courant (I3) ; et
- une seconde résistance de polarisation (R2) adaptée à régler l'amplitude dudit septième courant ;
  ledit quatrième transistor à effet de champ formant avec un cinquième transistor (M4) à effet de champ ledit second miroir de courant de sorte que ledit second courant est fonction dudit septième courant ;
  le drain dudit quatrième transistor à effet de champ étant relié à ladite seconde entrée dudit amplificateur opérationnel et à la première borne de ladite seconde résistance de polarisation ;
  la deuxième borne de ladite seconde résistance de polarisation étant reliée audit premier potentiel de tension ;
  la première entrée dudit amplificateur opérationnel étant reliée à l'émetteur dudit premier transistor bipolaire ;
  le drain dudit premier transistor à effet de champ étant reliée à la première entrée dudit amplificateur opérationnel parmi ledit au moins un second amplificateur opérationnel ; et
  la sortie dudit amplificateur opérationnel étant reliée à chacune des grilles des quatrième et cinquième transistors à effet de champ.

**9.** Source de tension selon les revendications 5 et 8, **caractérisée en ce qu'**elle comprend, en outre :

- une source de polarisation (100) permettant de fournir un courant (ibias) et/ou une tension (vbias) de démarrage auxdites première et seconde sources de courant et auxdits moyens de sommation ;
- des moyens de démarrage desdites première et seconde source de courant et desdits moyens de sommation, lesdits moyens de sommation étant alimentés par ladite tension de démarrage.

**10.** Source de tension selon la revendication 9, **caractérisée en ce que** lesdits moyens de démarrage comprennent des sixième, septième et huitième transistors (M6, M7, M8) à effet de champ, la grille de chacun desdits transistors étant alimentée par ladite tension de démarrage et la source de chacun desdits transistors étant alimentée par une tension d'alimentation de ladite source de tension ;
le drain dudit sixième transistor à effet de champ étant connecté au drain dudit premier transistor à effet de champ ;

le drain dudit septième transistor à effet de champ étant connecté au drain dudit second transistor à effet de champ ; et

le drain dudit huitième transistor à effet de champ étant connecté au drain desdits troisième et cinquième transistors à effet de champ.

**11.** Source de tension électrique selon l'une quelconque des revendications 1 à 10, **caractérisée en ce qu'**une variation dudit second courant en fonction de ladite température compense une variation dudit premier courant en fonction de ladite température, de sorte que ledit courant de référence est indépendant de ladite température.

**12.** Source de tension électrique selon l'une quelconque des revendications 1 à 11, **caractérisée en ce qu'**une variation dudit second courant en fonction de ladite température ne compense pas une variation dudit premier courant en fonction de ladite température, de sorte que ledit courant de référence dépend de ladite température.

**13.** Source de tension électrique selon la revendication 12, **caractérisée en ce qu'**une variation dudit courant de référence est proportionnelle à une variation de ladite température.

**14.** Capteur de température et/ou détecteur de seuil de température comprenant une source de tension électrique (500) selon l'une quelconque des revendications 12 et 13, **caractérisé en ce que** ledit capteur de température et/ou ledit détecteur de seuil de température comprennent, en outre, des moyens de mesure (501) de ladite tension de référence (VTEMP).

**15.** Capteur de température et/ou détecteur de seuil de température selon la revendication 14, **caractérisé en ce que** ledit capteur de température et/ou ledit détecteur de seuil de température comprennent, en outre :

- des moyens de générer une tension indépendante (VREF) de ladite température dans ladite plage de fonctionnement ; et
- des moyens de comparaison (501) de ladite tension de référence et de ladite tension indépendante de la température.

**16.** Puce électronique comprenant une source de tension selon l'une quelconque des revendications 1 à 13.

**17.** Système comprenant une source de tension selon l'une quelconque des revendications 1 à 13 et un dispositif électronique alimenté par ladite source de tension. tension.

**18.** Système selon la revendication 17, **caractérisé en ce que** ledit dispositif appartient au groupe comprenant :

- les convertisseurs analogiques/numériques et/ou numériques/analogiques ;
- les cartes à microprocesseur ;
- les radio-téléphones ;
- les circuits de régulation de charge de batterie ;
- les dispositifs électroniques dédiés aux véhicules ;
- les capteurs de températures ;
- les superviseurs d'alimentation électrique ;
- les dispositifs de conversion numérique/analogique et/ou analogique numérique ;
- les circuits de réinitialisation ;
- les dispositifs électroniques dédiés aux engins spatiaux ;
- les dispositifs électroniques dédiés aux engins militaires ; et
- les dispositifs audio ou audiovisuels.

Fig. 1

Fig. 2

**Fig. 3**

**Fig. 4**

EP 1 380 914 A1

Fig. 5

20

**Office européen des brevets**

**RAPPORT DE RECHERCHE EUROPEENNE**

Numéro de la demande

EP 03 36 4013

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 6 356 161 B1 (NOLAN JAMES B  ET AL) 12 mars 2002 (2002-03-12) | 1,2 | G05F3/26 |
| A | * le document en entier * | 3-18 | |
| | --- | | |
| X | US 5 604 427 A (KIMURA KATSUJI) 18 février 1997 (1997-02-18) | 1,2 | |
| A | * le document en entier * | 3-18 | |
| | --- | | |
| A | US 6 239 868 B1 (LOUDERMILK ALAN R  ET AL) 29 mai 2001 (2001-05-29) * abrégé * | 1-18 | |
| | --- | | |
| A | US 6 335 661 B1 (FURMAN BRUCE MICHAEL) 1 janvier 2002 (2002-01-01) * abrégé * | 1-18 | |
| | ----- | | |

| | | | DOMAINES TECHNIQUES RECHERCHES (Int.Cl.7) |
|---|---|---|---|
| | | | G05F |

Le présent rapport a été établi pour toutes les revendications

| Lieu de la recherche | Date d'achèvement de la recherche | Examinateur |
|---|---|---|
| LA HAYE | 14 octobre 2003 | Schobert, D |

CATEGORIE DES DOCUMENTS CITES

X : particulièrement pertinent à lui seul
Y : particulièrement pertinent en combinaison  avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document  correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**                EP 03 36 4013

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-10-2003

| Document brevet cité au rapport de recherche | | Date de publication | Membre(s) de la famille de brevet(s) | | Date de publication |
|---|---|---|---|---|---|
| US 6356161 | B1 | 12-03-2002 | US | 6020792 A | 01-02-2000 |
| | | | US | 6052035 A | 18-04-2000 |
| | | | EP | 1142114 A2 | 10-10-2001 |
| | | | TW | 476190 B | 11-02-2002 |
| | | | WO | 0076069 A2 | 14-12-2000 |
| | | | EP | 0944169 A2 | 22-09-1999 |
| | | | JP | 11298299 A | 29-10-1999 |
| | | | WO | 0036745 A1 | 22-06-2000 |
| | | | CN | 1296665 T | 23-05-2001 |
| | | | EP | 1053596 A1 | 22-11-2000 |
| US 5604427 | A | 18-02-1997 | JP | 2682470 B2 | 26-11-1997 |
| | | | JP | 8123568 A | 17-05-1996 |
| US 6239868 | B1 | 29-05-2001 | US | 5745229 A | 28-04-1998 |
| | | | US | 5759030 A | 02-06-1998 |
| | | | US | 5926262 A | 20-07-1999 |
| | | | US | 5880826 A | 09-03-1999 |
| | | | US | 5966205 A | 12-10-1999 |
| | | | US | 2002180953 A1 | 05-12-2002 |
| | | | US | 6417917 B1 | 09-07-2002 |
| | | | AU | 733060 B2 | 03-05-2001 |
| | | | AU | 1571397 A | 28-07-1997 |
| | | | CA | 2238498 A1 | 10-07-1997 |
| | | | EP | 0909376 A1 | 21-04-1999 |
| | | | JP | 2000502804 T | 07-03-2000 |
| | | | NO | 983057 A | 18-08-1998 |
| | | | US | 2002097400 A1 | 25-07-2002 |
| | | | WO | 9724587 A1 | 10-07-1997 |
| | | | US | 6118521 A | 12-09-2000 |
| | | | US | 6490038 B1 | 03-12-2002 |
| | | | US | 6040902 A | 21-03-2000 |
| | | | US | 5883708 A | 16-03-1999 |
| | | | AU | 734091 B2 | 07-06-2001 |
| | | | AU | 1571497 A | 28-07-1997 |
| | | | CA | 2238499 A1 | 10-07-1997 |
| | | | EP | 0877577 A1 | 18-11-1998 |
| | | | JP | 2000503117 T | 14-03-2000 |
| | | | NO | 983058 A | 19-08-1998 |
| | | | WO | 9724075 A1 | 10-07-1997 |
| | | | US | 6264470 B1 | 24-07-2001 |
| | | | US | 5871351 A | 16-02-1999 |
| | | | US | 5851113 A | 22-12-1998 |
| | | | AU | 757807 B2 | 06-03-2003 |
| | | | AU | 8380298 A | 25-01-1999 |
| | | | BR | 9810655 A | 30-10-2001 |

Pour tout renseignement concernant cette annexe : voir Journal Officiel de l'Office européen des brevets, No.12/82

**EP 1 380 914 A1**

**ANNEXE AU RAPPORT DE RECHERCHE EUROPEENNE
RELATIF A LA DEMANDE DE BREVET EUROPEEN NO.**

EP 03 36 4013

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-10-2003

| Document brevet cité au rapport de recherche | | Date de publication | Membre(s) de la famille de brevet(s) | | Date de publication |
|---|---|---|---|---|---|
| US 6239868 | B1 | | EP | 0993601 A1 | 19-04-2000 |
| | | | JP | 2002508076 T | 12-03-2002 |
| | | | US | 6449041 B1 | 10-09-2002 |
| | | | US | 2003011768 A1 | 16-01-2003 |
| | | | US | 2003103199 A1 | 05-06-2003 |
| | | | US | 2002024653 A1 | 28-02-2002 |
| | | | WO | 9901745 A1 | 14-01-1999 |
| | | | AU | 8380398 A | 25-01-1999 |
| | | | US | 6271913 B1 | 07-08-2001 |
| | | | US | 2002003620 A1 | 10-01-2002 |
| | | | WO | 9901746 A1 | 14-01-1999 |
| | | | US | 6249340 B1 | 19-06-2001 |
| | | | US | 6222620 B1 | 24-04-2001 |
| | | | US | 6038016 A | 14-03-2000 |
| | | | US | 6249339 B1 | 19-06-2001 |
| US 6335661 | B1 | 01-01-2002 | JP | 2002098593 A | 05-04-2002 |
| | | | NL | 1018056 C2 | 11-06-2002 |
| | | | NL | 1018056 A1 | 13-11-2001 |
| | | | TW | 503312 B | 21-09-2002 |

EPO FORM P0460

Pour tout renseignement concernant cette annexe : voir Journal Officiel de l'Office européen des brevets, No.12/82

23